# EUROPEAN PATENT APPLICATION

(11) **EP 2 829 617 A1**
(43) Date of publication of application: **28.01.2015**
(21) Application number: 13178154.4
(22) Date of filing: 26.07.2013
(51) Int. Cl.: C14C 3/20, C14C 3/22, C14C 3/28, C14C 3/10, C14C 9/02, C14C 11/00, C09D 175/04

(54) **Process for retanning leather**

(71) Applicant: TFL Ledertechnik GmbH, 79576 Weil am Rhein (DE)
(72) Inventor: The designation of the inventor has not yet been filed
(74) Representative: Pommerenke, Alexander

(57) **Abstract**

The present invention is directed to a process for retanning leather comprising the steps of:
a) providing tanned or pre-tanned leather
b) treating the tanned leather of step a) with a composition comprising hollow microspheres, preferably as an aqueous composition, the hollow microspheres have a true density of from 0.01 to 0.10 g/cm³ (25°C) and/or a bulk density of the dry powder of 0.005 to 0.06 g/cm³ (25°C),
c) drying, whereby the temperature of the leather during drying does not exceed 75 °C.as well as to leather obtained by said process.

## Description

The present invention is directed to a process for retanning leather as well as leather produced thereby.

The use of hollow microspheres in the process of retanning leather has been described in the art. All of the processes have in common that the hollow microspheres used are filled with a propellant which expand the microspheres due to a heat treatment step.

US 5,368,609 relates to a softening filler for leather comprising thermo-expansible microcapsules of thermoplastic resin. By entering the spaces between the leather fibers during impregnation, followed by heat treatment where the microcapsules expand, the spaces are expanded making the leather soft and voluminous.

EP 1 270 746 A1 refers to a process for the preparation of leather comprising a step of adding to wet skin thermally expandable microspheres. The thermally expandable microspheres used have a thermoplastic polymer shell encapsulating a propellant. Said thermally expandable microspheres are added to wet skin, followed by a step of heat treatment at a temperature sufficient to result in expansion of the microspheres captured in the skin. During heat treatment the shell softens and gives way to the internal pressure of the evaporating propellant, resulting in significant expansion of the microspheres, normally about 2 to about 5 times their diameter. The aim of encapsulating and expanding microspheres within the skin is to give more substance (thicker leather) as well as to increase the area yield of skin. However, due to the heat treatment step the leather is detrimentally affected, since it becomes slightly brittle.

Also WO 2008/043643 A1 refers to a process for retanning leather using hollow microspheres wherein a tanned leather is treated in aqueous liquor in the presence of hollow microspheres filled with a blowing agent. The leather obtained is dried after further optional retanning steps and treated with steam and infra-red at 80 to 120°C. Due to the treatment with steam the blowing agent present in the microspheres expands resulting in expansion of the microspheres of 2 to 5 times their diameter. Also with this process, due to the heat treatment step the leather is detrimentally affected, since it becomes slightly brittle. The very short exposure time to steam and IR may also carry the risk to not fully expand the microspheres in the cross-section of the leather.

The hollow microspheres used in WO 2008/043643 A1 are unexpanded microspheres being filled with a blowing agent. Consequently, the true density and the bulk density of such unexpanded microspheres at 25°C are respectively in the range 1.0 to 1.2 g/cm³ (true density) and 0.6 to 0.8 g/cm³ (bulk density). The true density can be determined with a helium pycnometer and is the density of the microspheres as such. The bulk density is determined by measuring the mass of a defined volume of the dry powder, preferably according to ISO 8460, section 1 (determination of free-flow bulk-density).

However, the aforementioned processes have several drawbacks. First of all, due to the heat treatment necessary for expanding the microspheres the leather becomes slightly brittle, especialy pronounced on chrome free leather. Additionally a large amount of microspheres is needed and the process for expanding microspheres is complicated with high energy consumption. The heat treatment processes also offer the risk to not have a complete and uniform particle expansion thru the leather cross-section. Electron scanning microscopy shows that some particles have been deformed or even destroyed after the steam or IR expansion treatment.

Thus, there is a need in the art for a process providing the following benefits: First of all a simple process which allows tanneries to avoid complicated and costly processes to expand microspheres with steam or an infra-red oven has to be provided. Moreover, the improved process shall provide a significant effect of filling with a substantially lower quantity of hollow microspheres compared to the state of the art. Additionally, a more uniform distribution through the leather cross-section is to be provided, whereby the leathers obtained have a good overall fullness and mainly good selective filling in the flanks, thus giving articles with significantly higher cutting yield. Also, the customer process of leather making involves a high amount of retanning and fatliquoring agents as well as dyestuffs. It is therefore desirable to reduce the required amount of these products without compromising the leather properties. This will lead additionally to the reduction of the specific weight of the leather.

The technical problem underlying the present invention is solved by a process for retanning leather comprising the steps of:
a) providing tanned or pre-tanned leather
b) treating the tanned leather of step a) with a composition comprising hollow microspheres, preferably as an aqueous composition, the hollow microspheres have a true density of from 0.01 to 0.10 g/cm³ (25°C) and/or a bulk density of the dry powder of 0.005 to 0.06 g/cm³ (25°C).
c) drying, whereby the temperature of the leather during drying does not exceed 75°C.

The true density can be determined with a helium pycnometer and is the density of the microspheres as such. The bulk density is determined by measuring the mass of a defined volume of the dry powder, preferably according to ISO 8460, section 1 (determination of free-flow bulk-density).

In the context of the present invention tanned or pre-tanned leather encompasses chrome-tanned leather. Leather pretanned without chromium and vegetable-pretanned leather can be used as such. Leather containing mineral tanning agent or leather free of mineral tanning agent is preferred. To prepare the leather used in step a), skins and hides of all kind of animals can be used.

In step b) the amount of hollow microspheres used preferably is 0.05 to 1.0 % by weight, based on dry weight of the leather (assuming shaved leather having a 50 wt-% water content). Preferably, in step b) the amount of hollow microspheres used is 0.1 to 0.7 % by weight

Preferably, the composition used in step b) is an aqueous composition having a solid content of hollow microspheres from 0.5 to 15 % by weight.

The hollow microspheres have a shell and an interior (cavity). The shell is preferably composed of an organic polymer or copolymer. Monomers suitable for the synthesis of the shell of the hollow microspheres are in particular monomers containing nitrile groups, such as acrylonitrile, methacrylonitrile, fumaronitrile and crotononitrile, acrylates or methacrylates, such as ethyl acrylate, methyl acrylate, methyl methacrylate, isobornyl methacrylate and hydroxyethyl methacrylate, vinyl halides, such as vinyl chloride and vinylidene chloride, vinyl esters, such as vinyl acetate and vinyl formate and styrene and substituted styrene compounds. In the synthesis of the shell, it is also advantageous to use polyunsaturated compounds which serve as crosslinking agents. The amount of such crosslinking agents is usually 0.1 to 2% by weight, based on the sum of all comonomers. Suitable polyunsaturated compounds are, for example, allyl methacrylate, ethylene glycol dimethacrylate, diethylene glycol dimethacrylate, triethylene glycol dimethacrylate, polyethylene glycol dimethacrylate, trimethylolpropane trimethacrylate, pentaerythrityl tetramethacrylate, bis(methacryloyloxymethyl)tricyclodecane and the corresponding diacrylates, divinylbenzene, etc.
Polymers and copolymers which are composed of vinylidene chloride, acrylonitrile and (meth)acrylate monomers, and mixtures thereof, are particularly preferred. Polyurethanes or polyurethane ureas are also suitable as wall material.
The thin shell particularly preferably consists of a copolymer of more than 75% of polyvinylidene chloride and of less than 25% of polyacrylonitrile.

Preferably, the hollow microspheres of step b) have a diameter distribution of from 1 to 200 µm, preferably from 2 to 100 µm and more preferably from 5 to 50 µm.

Preferably, at 23 °C (atmospheric pressure) less than 20%, even more preferred less than 15%, preferably less than 10%, preferably less than 5%, even more preferred less than 2.0%, preferably less than 1.0% and most preferred less than 0.5% of the volume of the cavity present in the hollow microspheres of step b) comprises a liquid (propellant, blowing agent) having a boiling point of less than 80°C, preferably less than 70°C, even more preferred less than 60°C and most preferred less than 50°C at atmospheric pressure.

Preferably, at 23 °C (atmospheric pressure) at least 80%, even more preferred at least 85%, preferably at least 90%, preferably at least 95%, even more preferred at least 98%, preferably at least 99% and most preferred at least 99.5% of the volume of the cavity present in the hollow microspheres of step b) comprises a gas obtained by evaporation of the liquid (propellant, blowing agent).

Preferably, the volume of all components being present in the cavity of the hollow microspheres of step b) is summing up to 100%.

Preferably, less than 20% by weight, preferably less than 15% and even more preferred less than 10 % by weight of the total weight of the microspheres is the liquid (propellant, blowing agent).

The microspheres used preferably are expanded microspheres resulting in a true density of from 0.01 to 0.1 g/cm³, preferably from 0.02 to 0.05 g/ cm³ (25°C).

The microspheres used preferably are expanded microspheres resulting in a bulk density of from 0.005 to 0.06 g/cm³, preferably from 0.01 to 0.045 g/ cm³ (25°C).

In addition to the microspheres, the composition used in step b) can also contain further additives, such as dyes, synthetic tanning agents, resin tanning agents, vegetable tanning agents, polymer tanning agents like acrylic copolymers and polyurethanes, natural polymers, softening retanning agents, fatliquoring agents and dyeing auxiliaries, as well as chromium, aluminium or zirconium compounds. The composition may also contain thickening or stabilizing agents, biocides, cutting agents and other components that are customary used as formulating agents. Preferably, the additives are polymers and thickening agents. Preferably, the ratio between hollow microspheres and additives is in the range of 5:1 to 1:20, related to the mass of the components. Especially preferred are ratios between 3:1 and 1:10.

In step b), other auxiliaries may be used prior to, simultaneously or subsequent to applying the aforementioned composition. These auxiliaries may comprise synthans like condensation products based on aromatic compounds such as for example phenol, naphthalene, phenolsulfonic acid, naphtalenesulfonic acid and formaldehyde , vegetable tanning agents like Mimosa,Tara, Quebratcho and chestnut, polymer retanning agents like acrylic copolymers of acrylic acid and natural polymers. Other auxiliaries are fatliquoring agents available as commercial products based on: animal fats like for example fish oil, lard oil or lanolin, vegetable fats like for example castor oil, coconut oil, olive oil or lecithine, synthetic fatliquors like for example chloro or sulfochloro paraffin and synthetic fatty acid esters and mineral oil. All these products are well known for a person skilled in the art.

Preferably, the composition of step b) further comprises other additives such as dyes, synthetic tanning agents, resin tanning agents, vegetable tanning agents, polymer tanning agents based on acrylate copolymers, natural polymers, softening retanning agents, fatliquoring agents and dyeing auxiliaries, as well as chromium, aluminum or zirconium compounds. The composition may also contain thickening and/or stabilizing agents, biocides, cutting agents and other components that are customary used as formulating agents.

Retanning and fatliquoring agents can be used from 0.5% up to 40% by weight of the composition. The retannage step can optionally be followed by dyeing and final fixation with for example formic acid. Among most used dyes are poly-azo dyes, acid dyes, sulfur dyes and metal complex dyes.

Retanning, fatliquoring and dyeing operation running time is from 0.5 h up to 24 h when the drum is let to run all the night at a temperature of 20°C to 60°C.

Preferably, during drying in step c) the microspheres substantially do not expand.

Preferably, after drying in step c) the hollow microspheres substantially have the same particle size distribution and/or same spherical shape as in the composition used in step b).

Preferably, after drying in step c) the hollow microspheres are substantially embedded in the leather.

The drying step c) can be carried out using conventional methods employed in tanneries like 1) vacuum drying at 45°C up to max 65°C for 1 s to 5 min followed by hanging at room temperature at maximum 35°C for 2 h to up 48 h, 2) hanging and drying at room temperature at max 45°C for 2 h up to 48 h, 3) toggling or clamped drying (the hides are stretched by use of clamps) from room temperature up to 70°C for 2 h up to 48h or 4) vacuum drying like described above followed by forced air conditioned drying at max 45°C.

During drying in step c) the temperature of the leather does not exceed 75°C, preferably does not exceed 70 °C, even more preferred does not exceed 65°C and most preferred does not exceed 60 °C.

The leather obtained after step c) may be further processed according to customary tannery processes involving mechanical operations like staking, buffing, milling, toggling, splitting etc. and the application of a coating such comprising for example ployacrylate binders, polyurethanes, polybutadienes, casein, nitrocellulose laquers, pigments, dyes, silicones, matting agents, crosslinkers and any other components commonly used in the finishing of leather. The coating may be applied by spray application, reverse roller coating, transfer coating, curtain coating, padding etc.

In a further preferred embodiment, simultaneously or subsequent to step b) the leather is treated with retanning agents and/or dyeing agents and/or fatliquoring agents.

In a further preferred embodiment, prior to step b) the leather is treated with a retanning agent and/or dyeing agent.

A further aspect of the present invention is directed to leather obtained by the aforementioned process.

Preferably, the hollow microspheres are substantially embedded in the leather.

In a further preferred embodiment the leather is used as buffed, full-grain leather or as split leather for automotive, furniture, garment, glove, bag, aircraft, lining and/or upper leather articles.

### Examples

### Example 1

### Hollow microspheres description

The expanded hollow microsphere sample used in the following examples is based on a thermoplastic copolymer of acrylonitrile and vinylidenchloride containing between 6 and 11 wt% isobutane based on solid weight as propellant or blowing agent. Supplied as a "wet cake" with a bulk density of 0.22 g/ cm³ it contains 15% of dry expanded hollow microspheres having a true density of 0.04 g/cm³ and a bulk density of 0.025 g/cm³. The bulk density is determined by measuring the mass of a defined volume of dried powder of the microspheres according to ISO 8460, section 1 (determination of free-flow bulk-density).
The particle size of the powder version of hollow microspheres has been measured with laser light scattering using a Mastersizer 2000 apparatus from Malvern company. The average particle size D(0,5) is 20 micrometers and particle size distribution is 2.6.
An example of commercial sample of expanded hollow microspheres can be Expancel 461 WE20 from AKZO .

### Expanded hollow microspheres slurry

Into 750 ml deionized water containing 1,0 g of a silicone fluid defoamer like SILFORM SE 2 from Wacker Chemie AG, 200 g of expanded hollow microspheres 461 WE20 having a dry content of 15% is added under good agitation until dispersion is homogeneous. 25,0 g of ACRYSOL ASE-60 with 28% solids acrylic swellable emulsion thickener is added into the mixing vessel continuously over a period of 20-30 minutes.
The pH of the solution is than adjusted with a 95% solution of 2-amino-2-methyl-1-propanol neutralization agent (AMP-95 from Angus Chemie GmbH in the range 7 to 9. This causes the viscosity of the dispersion to raise at 2000 to 5000 cps (23°C). The dispersion thus obtained is stable several months at room temperature. Measured density of the dispersion is 0,55 -0,60 g/cm³ (using a picnometer)..

### Example 2

### Unexpanded microspheres slurry

Into 750 ml deionized water containing 1,0 g of a silicone fluid defoamer like SILFORM SE 2 with 25% solids from Wacker Chemie AG, 45 g of unexpanded microspheres based on a copolymer of acrylonitrile and (like EXPANCEL 460 WU 40) having a dry content of 68% and a bulk density of 1.1 g/cm³ is added under good agitation until dispersion is homogeneous.
25,0 g of ACRYSOL ASE-60 with 28% solids acrylic swellable emulsion thickener is added into the mixing vessel continuously over a period of 20-30 minutes.
The pH of the solution is then adjusted with a 95% solution of 2-amino-2-methyl-1-propanol neutralization agent (AMP-95 from Angus Chemie GmbH in the range 7 to 9. This causes the viscosity of the dispersion to raise at 2000 to 5000 cps (23°C). The dispersion thus obtained is stable several months at room temperature.
The measured particle size using the Mastersizer 2000 gave a particle size D(0,5) of 15 micrometers.

### Example 3

### Microsphere slurry

Into 750 ml deionized water containing 1,0 g of a silicone fluid defoamer like SILFORM SE 2 with 25% solids from Wacker Chemie AG, 200 g of expanded hollow microspheres with solid content of 15% used in example 1 is added under good agitation until dispersion is homogeneous.
No acrylic thickener is added. The obtained dispersion has to be used immediately and can be added directly into the drum containing the leather skin.

### Example 4

### Formulation with acrylic binder dispersion

Into 710 g of a copolymer of acrylic acid and acrylamide having 30% solids containing 1,0 g of a silicone fluid defoamer like SILFORM SE 2 with 25% solids from Wacker Chemie AG, 163 g of expanded hollow microspheres based on a copolymer of acrylonitrile and vinylidenchloride (like the one used in example 1) having a dry content of 15% is added under good agitation until dispersion is homogeneous.
71,0 g of ACRYSOL ASE-60 with 28% solids acrylic swellable emulsion thickener is added into the mixing vessel continuously over a period of 20-30 minutes.
The pH of the solution is than adjusted with a neutralization agent (like a 20% solution of 2-amino-2-methyl-1-propanol) in the range 7 to 9. This causes the viscosity of the dispersion to raise at 2000 to 5000 cps (23°C). The dispersion thus obtained has a solid content of 23-25%, a dry content of microspheres of 2,4 % is stable several days at room temperature.

### Example 5

### Formulation with acrylic binder dispersion

Into 250 g deionized water, 100 g of expanded microspheres based on a copolymer of acrylonitrile and vinylidenchloride (like the one used in example 1) having a dry content of 15% is added under good agitation until dispersion is homogeneous.
An methylmethacrylate styrene copolymer obtained with emulsion polymerization (30% solids) is than added over a period of 15-20 minutes to the mixing vessel. When homogeneous, 150 g of an emulsion based on modified leicithin (70% solids) is continuously add under agitation.
The thus obtained formulation has a total solid content of 25-26%, a dry content of microspheres of 1,5% and is stable several weeks at room temperature.

### Example 6

### Formulation with a fatliquor emulsion

Into 180 g glycerine, 120 g of an emulsion of lecithin is added continuously in 15-20 minutes under good agitation. When the mixture is homogenoeous, 380 g of a fatliquor emulsion 50% solids based on fatty acid sulfonamide sulfosuccinate is added under good agitation followed by the addition of 100 g of expanded hollow microspheres based on a copolymer of acrylonitrile and vinylidenchloride (like that of example 1) having a dry content of 15%.
The formulation is homogeneous, has a solids content of 33-34%, 1,5% dry microspheres and is stable several weeks at room temperature.

### Application on wet blue hides

### Example 7 (invention)

### Material

2 corresponding wet blue half hides have been used with a thickness of 1,4-1,6 mm.
Hides have been weighed. All raw material concentration are expressed in % based on hide weight.

### Retannage process using formulation from example 1 (expanded microspheres slurry)

### Washing and chrome retannage

The half hide is put into a rotating steel drum filled up with 300 % water and heat up to 35°C. 0,3% formic acid (85%) is then added and the drum is allowed to rotate for 30 min. The pH of the liquor is 3,9.
The aqueous solution is then removed from the drum. 100 % water is added to the drum and heated to 35°C. 4,0% Chrome 33% is added and the drum rotates for 60 min.
The float is then neutralized respectively with 3,0% of a mixture of organic acid salts (like SELLASOL NG gran from TFL Ledertechnik) for 20 min. To obtain a pH of 4,6 and 1,0% sodium bicarbonate for 60 min (final PH 5,0). The aqueous solution is then removed from the drum.

### Retannage/ Dyeing

50% water is added to the drum and heated to 35°C. 5,0% of a synthan mix of aromatic sulfone (like SELLATAN GSB liq. from TFL Ledertechnik) is added to the water and rotated for 10 min.
Dyeing is than obtained by adding 3,0% of dye(like SELLA STAR Havanna TFL) to the drum. The drum is let to rotate for 20 min.

Then an acrylic copolymer of acrylic acid and acrylamide (MAGNOPAL PGN, from TFL Ledertechnik) is added to the mixture. The rotation time of the drum is 20 min. A pH of 5,1 has been measured.

After this step, 5,0% of invention formulation from example 1 (microsphere slurry) is added to the drum and rotated for 90 min. The final pH is adjusted to 3,7 by adding 100 % water (50°C) and 3,0 % formic acid (85%).

### Washing

After these different steps, the drum is drained off and the hide is washed out with 300 % hot water (50°C) for 10 min.

### Fatliquoring

A drum containing the hide prepared as described above is filled up with 100% water heated at (50°C). 5,0% of the formulation of example 1 (microsphere slurry) is added to the drum and let to rotate for 20 min.
Two fatliquors emulsions for example 4,0% of a combination of a sulfated fatty acid sodium salt and lanolin fatty acid (like CORIPOL BZE from TFL) and 8,0% of a combination of fatty acid sulfonamide sulfosuccinate and chloroparaffin (like CORIPOL UFB/W from TFL) are added and the drum rotates for 40 min. The pH is set to 3,5 by adding 2,0 % formic acid (85%) (The drum is running for 30 min). The aqueous solution is then removed from drum.

### Final washing

The hide is then washed with 300 % 40°C hot water for 10 min followed by 300% water at 25°C for 10 min.

The final leather is let for the night, then vacuum dried 2 min at 65°C.

### Example 8

### Retannage process without formulation according to example 1 (expanded microspheres slurry)

The leather preparation is the same as for example 7 but no microsphere slurry is added to the drum.

Results obtained with examples 7 and 8 are given in table 1.

**Table 1.**

| Hide | Left Side | Right side |
|---|---|---|
| | Example 7 (invention) | Example 8 (reference |
| Thickness in backbone | 1,7-1.8 mm | 1.6 mm |
| Thickness in belly and flanks | Belly : 1.8- 1.9 mm | Belly : 1.6- 1.7 mm |
| | Flanks: 1.9 - 2.1 mm | Flanks: 1.7 - 1.8 mm |
| Colour | More levelled | Flanks pronounced slightly less levelled |
| Hardness | 0 | -1 / 0 sl ightly softer |
| Tightness | +1 especially in flanks more tight | 0 |
| Fullness overall | +1 | 0 |
| | selecetive filling in Belly and flanks | Backbone similar , flanks empty |
| General | Small flanks, more tight , noticeable more fullness in loose and empty parts | Large flanks |

| | | |
|---|---|---|
| +2 - very good/ significant difference +1 - good / noticeable difference 0 - moderate / standard | | |

Leather evaluation showed noticeable increase in fullness in the loose structured areas of the hide with measurable increase in substance. The leather quality with the formulation from example 1 (microspheres slurry) is more firm, more leveled and tighter in the flanks than the leather made without microspheres slurry.

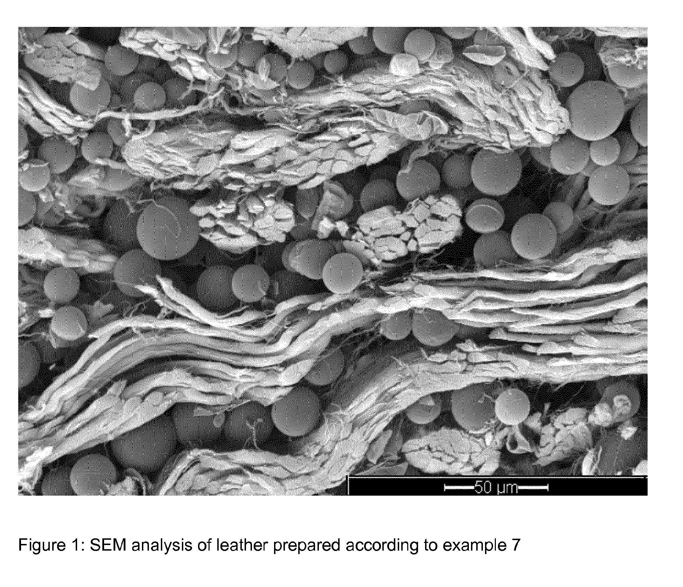

The leather prepared in Example 7 was subjected to a SEM analysis (figure 1) to check the uniformity of particle distribution in the leather and the integrity of the hollow microspheres after the application process. The picture shows that the voids in the leather structure are uniformly filled with hollow particles and that essentially all particles retained their spherical shape and their original size.

### Application on chrome free automotive hides (FOC leather)

The aim of these trials is to evaluate the ability of microsphere slurry in combination with an acrylic copolymer to reduce or replace partly traditional synthan and fatliquor agents thereby maintaining the leather character and the physical properties.

### Material

One automotive wet white shaved hide has been used with a thickness of 1,1 mm. Four pieces have been cut out and named example 9, example 10, example 11 and example 12.
Hides have been weighed. All raw material concentrations are expressed in % based on hide weight.

### Example 9 (reference)

### Standard leather preparation

### Washing and neutralization

The hide is put into a rotating steel drum filled up with 200 % water and heat up to 35°C. The drum is allowed to rotate for 10 min. The pH is 4.9. The aqueous solution is then removed from the drum. 100 % water is added to the drum and heated to 35°C. The float is than neutralized with 6,0% of a anionic synthan based on a condensation product of phenolic sulfonic acid (like SELLATAN MBS from TFL Ledertechnik) for 60 min. The pH is adjusted to 5.2 by adding 2.0% sodium formate and 0.5% sodium bicarbonate for 60 min. The aqueous solution is then removed from drum.

### Retannage/dyeing

100% water is added to the drum and heated to 35°C. A synthan mix like 6,0% of a anionic synthan based on a condensation product of phenolic sulfonic acid (like SELLATAN MBS from TFL Ledertechnik)
and 4.0% of a synthetic retanning agent based on condensed phenol (like SELLATAN RP) is added to the water and rotate for 60 min. The same synthan mix is added again and rotated for another 60 min. The leather is dyed with 2.0% SELLA FAST Grey VW-L and 0.5 % SELLA FAST Beige GL for 30 min.
The pH is set to 4.0 by adding 100% water and 1.5% formic acid 85% after 60 min mixing is added to the mixture. The rotation time of the drum is 20 min. A pH of 5,1 has been measured.

### Washing

After these different steps, the drum is drained off and the hide is washed out with 300 % hot water (50°C) for 10 min.

### Fatliquoring

Drum containing the hide prepared as described above is filled up with 100% water heated at 50°C. Two fatliquors 6,0% of a modified Leicithin emulsion (like CORIPOL ALF from TFL) and 10,0% of a fatliquor emulsion based on fatty acid sulfonamide sulfosuccinate (50% solids like CORIPOL ESA) are added and the drum rotates for 90 min. The pH is set to 3,5 by adding 3,0 % formic acid 85%, the drum running for 40 min.The aqueous solution is then removed from drum.

### Washing

The hide is washed with 300 % water 25°C for 10 min and then the water is drained off.

### Fixation

300 % water is added to the drum and heated up to 35°C. 0.2% formic acid (85%) is added for 10 min followed by 0.5% of a solution of a copolymer of dimethylamine epichlorhydrin (like SELLA FIX E TFL) for 15 min. The water is subsequently drained off.

### Final washing

The hide is than washed with 300 % water 25°C for 10 min. The water is subsequently drained off.

The final leather is dried for 12 hours and subsequently vaccum dried for 2 min at 45°C.

### Example 10 (invention)

### Reduced synthan content during retanning step

The same leather preparation as for example 9, but half of the synthan mix used during retannage step has been replaced by 6.0 % of microspheres slurry from example 1 and 4.0% of an acrylic acid acrylamide copolymer (like MAGNOPAL PGN from TFL).

### Retannage/dyeing

100% water is added to the drum and heated to 35°C. 6.0% of microspheres slurry from example 1, 4.0% of acrylic acid acrylamide copolymer, 3,0% of a anionic synthan based on a condensation product of phenolic sulfonic acid (like SELLATAN MBS from TFL Ledertechnik) and 2.0% of a synthetic retanning agent based on condensed phenol (like SELLATAN RP) are added to the water and rotate for 60 min. The same synthan composition is added again and let to rotate for another 60 min. The leather is dyed with 2.0% SELLA FAST Grey VW-L and 0.5 % SELLA FAST Beige GL for 30 min. The pH is adjusted to be 4.0 by adding 100% water and 1.5% formic acid 85% after 60 min mixing is added to the mixture. The rotation time of the drum is 20 min. A pH of 5,1 has been measured.

### Example 11 (invention)

### Reduced synthan content during retanning step

The same leather preparation as for example 10 but the second synthan based on a synthetic retanning agent based on condensed phenol (like SELLATAN RP SELLATAN RP) has been removed and replaced by 3.0% of the first synthan based on a condensation product of phenolic sulfonic acid (like SELLATAN MBS from TFL Ledertechnik).

### Retannage/dyeing

100% water is added to the drum and heated to 35°C. 6.0% of microspheres slurry from example 1, 4.0% of acrylic acid acrylamide copolymer (like MAGNOPAL PGN) and 6,0% of a anionic synthan based on a condensation product of phenolic sulfonic acid (like SELLATAN MBS from TFL Ledertechnik) are added to the water and allowed to rotate for 60 min. 6.0% of the anionic synthan based on a condensation product of phenolic sulfonic acid (like SELLATAN MBS from TFL Ledertechnik) is added again and let to rotate for another 60 min.
The leather is dyed with 2.0% SELLA FAST Grey VW-L and 0.5 % SELLA FAST Beige GL for 30 min. The pH is set to 4.0 by adding 100% water and 1.5% formic acid 85% after 60 min mixing. The rotation time of the drum is 20 min. A pH of 5,1 has been measured.

### Example 12 (invention)

### Reduced fatliquor content during fatliquoring step

Same leather preparation as for example 9 but half of fatliquor mix used during fatliquoring step has been replaced by 6.0 % of microspheres slurry according to example 1 and 4.0% of acrylic acid acrylamide copolymer (like MAGNOPAL PGN from TFL).

### Fatliquoring

Drum containing the hide prepared as described above is filled up with 100% water heated at 50°C. 6.0% microsphere slurry according to example 1, 4.0% of acrylic acid acrylamide copolymer (like MAGNOPAL PGN from TFL).
and two fatliquors 3,0% of a modified leicithin emulsion (CORIPOL ALF) and 5,0% of a fatliquor emulsion based on fatty acid sulfonamide sulfosuccinate (50% solids like CORIPOL ESA) are added and the drum rotates for 90 min.
The pH is set to 3,5 by adding 3,0 % formic acid 85%, the drum running for 40 min. The aqueous solution is then removed from the drum.

Leather evaluation and physical properties are given in table 2.

**Table 2.**

| | Example 9 (reference) | Example 10 (invention) | Example 12 (invention) | Example 11 (invention) |
|---|---|---|---|---|
| Colour | 0 | 0+ | 0 | 0 |
| Softness | 0 | 0 | 0- | 0 |
| | Very soft | | | |
| Tightness Milling pattern | 0 | 0- | 0+ | 0+ |
| | | | Second best | best |
| Fullness overall | | 0- | 0+1 | +1 |
| | 0 | Slightly more empty | Full and round Second best | Best |
| General | Very soft, nice | Very soft slightly less round | Surprisingly soft , round an tight very nice | Full ,round, soft tight Very nice |
| Sample thickness for density | 1.5 mm | 1.5 mm | 1.6 mm | 1.5 mm |
| Tear Strenght | 37 N | 42N | 39 N | 41N |
| Tensile strength | 213 N | 198N | 220N | 233N |
| | 91 % Elong. | 106 % Elong. | 83% Elong, | 96 % Elong. |
| Stitch Tear | 106 N | 105 N | 94N | 90 N |
| Specific weight | 0.592g/m³ | 0.584 g/m³ | 0.571 g/m³ | 0.561 g/m³ |
| Weight of sqf after milling | 885 g/m² | 873 g/m² | 911 g/m² | 839 g/m² |

| | | | | |
|---|---|---|---|---|
| +2 - very good/ significant difference +1 - good / noticeable difference 0 - moderate / standard | | | | |

Due to the presence of the microsphere slurry a reduction and replacement of synthan and fatliquor agents was achieved, thereby maintaining the leather character and the physical properties. Said result is surprising to the skilled artisan

### Application on wet blue hides

### Material

One wet blue shaved hide has been used with a thickness of 1,1 mm. Four pieces have been cut and named example 13, example 14, example 15 and example 16. Hides have been weighed. All raw material concentration are expressed in % based on hide weight.

### Example 13 (invention)

### Retannage process description

### Washing and chrome retannage

The hides are put into a rotating steel drum filled up with 300 % water and heated up to 35°C. 0,3% formic acid 85% is than added and the drum is allowed to rotate for 30 min. The pH of the float is 3.8-3.9. The aqueous solution is then removed from the drum. 100 % water is added to the drum and heated to 35°C. 4,0% Chrome 33% is added and the drum rotates for 60 min. The float is then neutralized with 3,0% of a mixture of organic acid salts (like Sellasol NG gan TFL Ledertechnik) for 20 min A pH of 4,6 was measured and 1,0% sodium bicarbonate was added for 60 min to obtain a final pH of 5,0. The aqueous solution is then removed from the drum.

### Retannage/ Dyeing

50% water is added to the drum and heated to 35°C. 6,0% of an aromatic sulfone synthan (like SELLATAN GSB liq. from TFL Ledertechnik) is added to the water and rotated for 40 min.

### Fatliquoring

A drum containing the hide prepared as described above is filled up with 100% water heated at 50°C. 8.0% microspheres slurry from example 1 and 14% of fatliquor based on fatty alcohol sulfosuccinate (like CORIPOL MK from TFL Ledertechnik) are added to the drum and rotated for 120 min. The pH is set to 3,5 by adding 2,0 % formic acid 85% and the drum is running for 30 min.The aqueous solution is subsequently removed from the drum.

### Final washing

The hide is than washed with 300 % (40°C) hot water for 10 min followed by 300% water at 25°C for 10 min.

The final leather is let for the night than vacuum dried 2 min at 65°C, hanged dry and milled 48 hours.

Final leather articles prepared above have been finished.

### Example 14 (reference)

Leather preparation is the same as for example 13 except that no microspheres slurry has been added.

### Example 15 (invention)

Leather preparation is the same as for example 13 (containing 8.0% of microspheres slurry) except that the fatliquor has been replaced by 14.0% of a carboxylated polyamide polymer.

### Example 16 (reference)

Leather preparation is the same as for example 15 except that no microspheres slurry has been added.

All leather articles prepared above have been finished.

Finishing of leather articles from examples 13, 14, 15 and 16.

### Prebase application

One coat of Prebase is applied via Roller coater using a RRC Roller 21 SS. Prebase is formulated as followed : 800 g of a composition made by mixing an acrylic copolymer with a polyurethane dispersion and fillers is diluted with 100 g of water. It is then added in the following order: 100 g of an polyether based polyurethane dispersion , 30 g of pigment and 20 g of an ethylene urea based crosslinker.
Application conditions are set in order to apply 3 g / sqf (square foot) wet. The hide is then rested 12 h before being milled for 2 h.

### Basecoat application

After the precoat has been applied, a basecoat is then prepared for application on the hide. Basecoat is formulated as followed.
770 parts of a compound containing an acrylic copolymer, a polyurethane dispersion, matting agent and additives is mixed with 30 g of a silica matting agent and diluted into 200 g water. 200 g of pigment compound is then added to the mixture under good agitation.
After viscosity adjustement at 25" with Cup Ford 4 (23°C), the basecoat is applied airless in one coat of 8-10 g / sqf wet.
After drying 2 min at 80°C, the hide is let to rest for 12 h and then milled for 4 h.

### Color coat application

Often a color coat is applied before the final topcoat. It allows to adjust the basecoat color and is slightly crosslinked . Color coat has been prepared as followed.

330 g of a matting polyurethane dispersion is mixed with 250 g of a NMP free polyether based polyurethane dispersion and 120 g of water. 50 g of a silicone additive, 110 g of pigment are added.
To this mixture, 100 g of a polyisocyanate crosslinker is added prior application. Color coat viscosity is adjusted at 25-27" Cup Ford 4 (23°C). The color coat is applied in 1 coat of 3,0-3,4 g/sqf wet. The leather is allows to dry 2 min at 80°C.

### Topcoat application

The topcoat is formulated as followed.
330 g of a matting polyurethane dispersion used to make the color coat is mixed with 60 g of a NMP free polyester polyether based polyurethane dispersion and 120 g of water. 90 g of a mixture of silicone additives and 5 g of pigment are added. To this mixture, 20 g of a polycarbodiimide crosslinker and 160 g of a polyisocyanate crosslinker are added to the prior application. Topcoat viscosity is adjusted at 25-30" Cup Ford 4 (23°C). The topcoat is applied in 2 successive coats of 2,0-2,4 g/sqf wet. The leather is allowed to dry 2 min at 80°C after each applications.

Leather evaluations and physical properties are given in table 3 and 4.

**Table 3.**

| Crust Evaluation | Example 13 (invention) | Example 14 (reference) |
|---|---|---|
| Thickness in backbone | 1.2 -1.3 mm | 1.1 mm |
| Thickness in belly and flanks | 1.2 - 1.3mm | 1.0 - 1.1 mm |
| Colour | 0 | 0 |
| Softness | +1 | 0 |
| Milling | +1 flanks | 0 |
| Fullness overall | +1 | 0 |
| General | +1 | 0 |
| Evaluation after finishing | | |
| General | Fuller, more round | 0 |
| Filling effect in Flanks | +1 | 0 |
| Softness | 0+ | 0 |
| Thickness of sample for testing after finishing | 1,30 mm | 1,25 mm |
| Area Weight | 872 g/m² | 872,6 g/m² |
| Specific weight | 0,673 g/m³ | 0,700 g/m³ |
| Tear Strenght | 38N F max | 33N F max |
| Stitch Tear | 90 N max | 73 N max |
| | 71 N/mm | 56 N / mm |
| Tensile strength | 202 N max | 201 N max |
| | 92 % Elongation | 80 % Elongation |

| | | |
|---|---|---|
| +2 - very good/ significant difference +1 - good / noticeable difference 0 - moderate / standard | | |

Improvement in flank filling and milling break in the flanks with example 13. The effect remains even after 48 hours milling. The finishing print retention was evaluated similar.
On finished quarters filling effect was still visible.

The physical properties increased with 8.0% microspheres slurry,especially stitch tear. The specific weight is also reduced for example 13.

**Table 4**

| | Example 15 (invention) | Example 16 (reference) |
|---|---|---|
| Thickness in backbone | 1.2-1.3 mm | 1.1 mm |
| Thickness in belly and flanks | 1.2- 1.3 mm | 1.0-1.1mm |
| | Strong increase in flanks | |
| Colour | 0 | 0 |
| Softness | +1 | 0 |
| Milling | +1 especially in flanks more full and even milling break | 0 |
| Fullness overall | +1 | 0 |
| General | +1 | 0 |
| Finished leather | | |
| Thickness of sample for area weight | 1,25 mm | 1,2 mm |
| Area weight | 778g/m² | 789g/m² |
| Specific weight | 0,625g/ m³ | 0,660g/ m³ |
| Tensile strenght | 201 N | 182N |
| | 69 % Elongation | 83% Elongation |
| Tear strenght | 52N | 51 N |
| Softness | 0+ | 0 |
| Milling | 0+ | 0 |
| | More regular in flanks | |
| Fullness overall | +1 | 0 |
| | Especially flanks and belly part | |
| General | More full in flanks | 0 |

| | | |
|---|---|---|
| +2 - very good/ significant difference +1 - good / noticeable difference 0 - moderate / standard | | |

A noticable improvement in flank filling and milling break in the flanks was evaluated for example 15.
The selective filling effect remains even after 48 hours milling.
After finishing the effect of the microspheres remains still visible, especially in the flank and belly area.
Moreover, the leather according to the present invention becomes fuller, with a more regular milling in flank and belly area after embossing.

### Vegetable application on light wet blue hides

### Reduced vegetable tannin content with microsphere slurry

### Material

One wet blue shaved hide has been used with a thickness of 1,8 mm. Two pieces have been cut out and named example 17 and example 18.
Hides have been weighed. All raw material concentration are expressed in % based on the hide weight.

### Example 17 (invention)

### Retannage process description

### Washing

The hides are put into a rotating steel drum filled up with 300 % water and heated up to 35°C. 0,5% of tetrasodium salt of ethylene diamine tetraacetic acid (like BORON ST from TFL) is then added and the drum is allowed to rotate for 30 min. The pH is 3.9-4.0. The aqueous solution is subsequently removed from the drum.

### Neutralization / Retannage/ Dyeing

The drum is filled up with 100 % water and heated up to 35°C.
To the float 2,0% of a mixture of organic acid salts (like Sellasol NG gan TFL Ledertechnik), 2.0% of sodium formate and 4.0% of a synthan based on a neutral aromatic sulfone (like SELLATAN AG liq. From TFL) is added successively and the drum is rotated for 30 min. The pH is 4.8 after sodium formate addition and 4.9 after 30 min rotation.
Two aromatic synthetic synthans are added successively (6.0% of SELLATAN SU-V and 6.0% of SELLATAN RP) and let to rotate for 40 min. Two fatliquors are then added to the drum (2.0% of a combination of a sulfated fatty acid sodium salt and lanolin fatty acid (like CORIPOL BZE from TFL)), 2.0 % of a emulsion of modified lecithin (like CORIPOL ALF from TFL) and let to rotate for 20 min.
Then 8.0% microspheres slurry from example 1 and 10 % Mimosa are added to the drum and let to rotate for 60 min. The pH is 4.8.
0.5 % INVADERM LU, a mixture of two brown dye 1.0% of SELLA FAST BROWN HF-G and 2.0% of SELLA FAST BROWN HF-R are added and rotation continues for 180 min.
Then 100 % of water at 50°C is added to the drum with 1.0% of formic acid to bring the pH at 4.0.
The drum is allowed to rotate during the night.

Next day the hides are washed with 300% water at 50°C.

### Fatliquoring

A drum containing the hide prepared as described above is filled up with 150% water heated at 50°C. 4.0% of an acrylic copolymer is added and rotated for 20 min. 5.0% of a combination of a sulfated fatty acid sodium salt and lanolin fatty acid (like CORIPOL BZE from TFL) and 5.0 % of a emulsion of modified lecithin (like CORIPOL ALF from TFL) are added and the drum rotates for 40 min. 2.0% of an aromatic sulfone (like SELLATAN RP from TFL) is added and the drum rotates 20 min. 1.0% of formic acid 85% is then added followed after 20 min by 1.5% formic acid 85% .After 30 min. The final pH is 3.5. The hides are washed with 300% 35°C hot water.
The aqueous solution is then removed from drum.

### Fixation

150% of 35°C water is added to the drum followed by 1.0% of a solution of a copolymer of dimethylamine epichlorhydrin (like SELLA FIX E TFL). After 30 min, the hides are wash with 300% water.

The final leather is let for the night, then vaccum dried for 2 min at 60°C and hanged dry.

### Example 18 (reference)

Leather preparation is the same as for example 17 except that instead of 6.0% of hollow microspheres slurry, 10% of vegetable extract Quebracho tannin has been added.

Leather evaluations and physical properties are given in table 5 Table 5.

| Evaluation: | Example 18 (reference) | Example 17 (invention) |
|---|---|---|
| Colour/ levellness | 0 | 0 |
| Fullness overall | +1 | 0 |
| Fullness flanks | +1 | +1 |
| Softness | 0+ | 0 |
| Tightness | 0 | +1 |
| | More spongy, less tight | More compact |
| General | | Slightly better leather character in tightness and temper |
| Area weight | 1575 g/m² | 1488 g/m² |
| Specific weight | 630 g/m³ | 588 g/m³ |
| Stitch tear | 167 N | 202 N |

| | | |
|---|---|---|
| - 2 = poor / not acceptable -1 = unsatisfactory 0 = moderate +1 = good +2 = very good | | |

The aim of the trial was the direct comparison trial of 10 % Quebracho exchange vs. 6.0 % of hollow microspheres slurry (from example 1) on corresponding low chrome tanned wet blue made with a vegetable / synthetic retanning system.
The process of the present invention leads to a leather quality, specific and area weight and stitch tear resistance being advantageous.

## Claims

1. Process for retanning leather comprising the steps of:
a) providing tanned or pre-tanned leather
b) treating the tanned leather of step a) with a composition comprising hollow microspheres, preferably as an aqueous composition, the hollow microspheres have a true density of from 0.01 to 0.10 g/cm³ (25°C) and/or a bulk density of the dry powder of 0.005 to 0.06 g/cm³ (25°C),
c) drying, whereby the temperature of the leather during drying does not exceed 75 °C.

2. The process according to claim 1, **characterized in that** in step b) the amount of hollow microspheres used is 0,05 to 1,0 % by weight, based on the dry weight of the leather.

3. The process according to claim 1 or 2, **characterized in that** the composition of step b) is an aqueous composition having a solid content of hollow microspheres from 0.5 to 15 % by weight.

4. The process according to at least one of the claims 1 to 3, **characterized in that** the hollow microspheres of step b) have a diameter of from 1 to 200 µm, preferably from 2 to 100 µm and more preferably from 5 to 50 µm.

5. The process according to at least one of the claims 1 to 4, **characterized in that** at 23 °C less than 10% of the volume of the cavity present in the hollow microspheres of step b) comprises a liquid (propellant) having a boiling point of less than 80°C at atmospheric pressure.

6. The process according to at least one of the claims 1 to 5, **characterized in that** during drying in step c) the microspheres substantially do not expand.

7. The process according to at least one of the claims 1 to 6, **characterized in that** after drying in step c) the hollow microspheres substantially have the same particle size distribution and/or same spherical shape as in the composition used in step b).

8. The process according to at least one of the claims 1 to 7, **characterized in that** after drying in step c) the hollow microspheres are substantially embedded in the leather.

9. The process according to at least one of the claims 1 to 8, **characterized in that** drying step c) is carried out of from 1 s to 48 h.

10. The process according to at least one of the claims 1 to 9, **characterized in that** during drying in step c) the temperature of the surface of the leather does not exceed 80 °C.

11. The process according to at least one of the claims 1 to 10, **characterized in that** the composition of step b) further comprises other additives such as dyes, synthetic tanning agents, resin tanning agents, vegetable tanning agents, polymer tanning agents based on acrylate copolymers, natural polymers, softening retanning agents, fatliquoring agents and dyeing auxiliearies, as well as chromium, aluminium or zirconium compounds.

12. The process according to claim 11, **characterized in that** prior, simultaneously or subsequent to step b) the leather is treated with retanning agents and/or dyeing agents and/or fatliquoring agents.

13. The process according to at least one of the claims 1 to 10, **characterized in that** the composition of step b) further comprises a retannage agent and/or dyeing agent.

14. The process according to claim 13, **characterized in that** subsequent to step b) the leather is washed and treated with a fatliquoring agent.

15. The process according to at least one of the claims 1 to 10, **characterized in that** the composition of step b) further comprises a fatliquoring agent.

16. The process according to claim 15, **characterized in that** prior to step b) the leather is treated with a retanning agent and/or dyeing agent.

17. Leather obtained by the process according to at least one of the claims 1 to 16.

18. The leather according to claim 17, **characterized in that** the hollow microspheres are substantially embedded in the leather.

19. Use of the leather according claim 17 or 18 as buffed or full-grain leather or as split leather for automotive, furniture, garment, glove, bag, aircraft, lining and/or upper leather articles.
